# EUROPÄISCHE PATENTSCHRIFT

(11) **EP 0 443 385 B1**
(45) Veröffentlichungstag und Bekanntmachung des Hinweises auf die Patenterteilung: **25.05.1994**
(21) Anmeldenummer: 91101753.1
(22) Anmeldetag: 08.02.1991
(51) Int. Cl.: B30B 1/18, B01D 29/23, B01D 29/64, B01D 29/82

(54) **Verfahren und Vorrichtung zur Abtrennung von Feststoffen aus schleimigen Flüssigkeiten mit Pressschneckenseparatoren**
Process and device for separating solids from mud with screw presses
Procédé et dispositif de séparation de solides de liquides boueux à l'aide de presses à vis rotatives

(30) Priorität: 10.02.1990 DE 4004148
(43) Veröffentlichungstag der Anmeldung: 28.08.1991
(73) Patentinhaber: FAN ENGINEERING GMBH, D-59302 Oelde (DE)
(72) Erfinder: Eichler, Dietrich, W-8201 Grosskarolinenfeld (DE)
(74) Vertreter: Schmidt, Horst, Dr.

(56) Entgegenhaltungen:
- DE-A- 2 155 312
- DE-A- 3 407 284
- DE-A- 3 426 737

## Beschreibung

Die Erfindung betrifft ein Verfahren zur Abtrennung von Feststoffen aus schleimigen Flüssigkeiten mit Separatoren, bei denen der Preßdruck mit Hilfe einer Schnecke aufgebaut wird; sie betrifft weiter eine Vorrichtung zur Durchführung des Verfahrens mit Separatoren, bei denen der Preßdruck mit Hilfe einer Schnecke aufgebaut wird, mit einem Gehäuse, in dem zumindest ein Siebkorb und eine Schnecke angeordnet sind und das mindestens aufweist einen Befüllraum sowie einen Feststoff- und einen Flüssigkeitsaustrag.

Der Einsatz der Flüssigentmistung hat sich bei der Tierintensivhaltung bewährt und wird in zunehmendem Maße angewendet. Aus dieser Entwicklung wurden Techniken entwickelt, die bei der Flüssigentmistung anfallende Gülle in die Bestandteile "Feststoff" und "flüssige Phase" zu trennen. In einer Mitteilung aus dem Institut für Technologie der Bundesforschungsanstalt für Landwirtschaft, Braunschweig-Völkenrode, veröffentlicht in Grundl. Landtechnik Bd.37 (1987) Nr. 3 Seiten 98/107, wurden von R. Krause und R Ahlers unter dem Titel "Verfahrenstechnik des Separierens von Flüssigmist" die Problemstellen der Flüssigentmistung und die Bedeutung der Fest-Flüssig-Trennung der Gülle dargestellt. Weiterhin wurden die Vor- und Nachteile einzelner Geräte aufgezeigt und miteinander verglichen. Diese Veröffentlichung war die Grundlage der Darstellung der Charakteristik der bekannten technischen Lösungen und der kritischen Analyse zur europäischen Patentanmeldung mit der Anmeldenummer 89 119 460.7 "Verfahren zur Entwässerung von in Wasser suspendierten Feststoffen sowie Preßschneckenseparator dafür".

Auch die "Zeitschriftenreihe der Bauberatung Zement" des Verlages BETON, veröffentlicht in der Broschüre "Stallmist" 1988, Seite 102/106 die Prizipien des Separierens. Hier wird beispielsweise eine Siebschnecke beschrieben, deren Schnecke über einen stehende Siebkorb geführt wird, während die europäische Patentanmeldung 0062628 A1 ebenfalls eine Siebschnecke beschreibt, deren Siebtrommel mit der innenliegenden Schnecke mit umläuft.

Im praktischen Betrieb zeigte sich aber, daß der für die Kompostierung notwendige Wert für den Trockensubstanzgehalt im Feststoff von mehr als 30% nur von den Dekantern und dem Preßschneckenseparator neuerer Bauart bei bestimmten Güllearten erreicht wurde. Insbesondere bei abgelagerten Rindergüllen, bei Güllen, die aus Tieranlagen mit einer Sommergrasfütterung stammen und bei ähnlich schwer handhabbaren schleimigen Suspensionen brachten auch diese Maschinen keine befriedigenden Ergebnisse. In den Dekantern verhinderten die Schleimstoffe trotz hoher Zentrifugalkräfte eine ausreichende Entwässerung. In Preßschneckenseparatoren kommt es bei entsprechend hoher Viskosität nicht zur erforderlichen Schwerkraftentwässerung durch die Öffnungen des Siebkorbes, so daß das schleimige Gemisch nicht erfaßt und im Preßbereich weiter entwässert werden kann.

Aus dem Bereich der Betonverdichtung sind seit langem Vibrationseinrichtungen bekannt, die das Viskositätsverhalten des zu verarbeitenden Stoffes verändern. Dieses Ziel verfolgt auch die Offenlegungsschrift DE 34 26 737 A1, in der Vibrationseinrichtungen in Absetz-Becken oder -Behältern zur Veränderung der Viskosität und damit zur leichteren Sedimentation der Feststoffe eingesetzt werden.

Hieraus ergibt sich die der Erfindung zugrunde liegenden Aufgabe, die darin gesehen wird, das bekannte Verfahren so weiterzubilden, daß die aufgezeigten Schwierigkeiten vermieden werden und Güllen auch mit hohen Schleimgehalten und somit hohen Viskositäten mit einfachen Mitteln so entwässern zu können, daß die Restfeuchte des abgetrennten Feststoffes eine Weiterverwendung z.B. zum Kompostieren ermöglicht, um dieses für Schneckenpressen und Preßschneckenseparatoren bisher nicht beherrschte Einsatzgebiet für diese Vorrichtungen zu erschließen; es ist weiter Teil der Aufgabe, die Vorrichtung so weiterzubilden, daß das Verfahren mit dem Einsatz von unter den Bedingungen eines bäuerlichen Betriebes einfachen und robusten Geräten durchgeführt werden kann.

Diese Aufgabe wird für das Verfahren von den in dem Kennzeichen des Anspruchs 1 aufgeführten Merkmalen gelöst; die Lösung des Vorrichtungsteiles der Aufgabe geben die im Kennzeichen des Anspruchs 2 aufgeführten Merkmale, wobei eine vorteilhafte Weiterbildung von dem Unteranspruch beschrieben ist.

Da es sich bei den vorliegenden Feststoff-Flüssigkeits-Gemischen um "Nicht-Newton'sche" Flüssigkeiten handelt, werden in den Befüllraum des Preßschneckenseparators Schwingungen eingetragen, deren Wirkung sich bis in den Eingangsbereich des Siebkorbes fortsetzt, damit die Verringerung der Viskosität der schleimigen Flüssigkeit bewirkt und so die für die Abtrennung der Feststoffe erforderliche Schwerkraftentwässerung ermöglicht. Dies beruht auf dem Umstand, daß die Viskosität derartiger "Nicht-Newton'scher" Flüssigkeiten in stark bewegtem Zustand geringer ist, als im wenig oder nicht bewegten Zustand. Durch diese bis in den Siebkorb hinein fortgesetzten Schwingungen wird die Viskosität in diesem kritischen Bereich vermindert und so die Voraussetzung für ein Wirksam-werden des Siebes geschaffen. Dabei wird die Viskosität der schleimigen Flüssigkeit so weit herabgesetzt, daß diese durch die Öffnungen des Siebkorbes abfließen kann. Damit erfolgt so lange eine Aufkonzentration des Feststoffes, bis die Schnecke Feststoffanteile erfassen und einen Preßdruck aufbauen kann, der zu einem weiteren Abtrennen der schleimigen Flüssigkeit aus dem Feststoff und damit zu dessen weiterer Entwässerung führt.

Die Vorrichtung zum Durchführen des Verfahrens wird so ausgebildet, daß die von einem außerhalb des Befüllraumes liegenden Vibrator erzeugten Schwingungen über Stützrippen auf einen in der Flüssigkeit befindlichen Schwinger übertragen werden, wobei eine Membran den Abschluß des Innenraumes gewährleistet und alle schwingenden Elemente von Federn oder Gummipuffern getragen werden und sich in vertikaler in vertikaler Richtung entsprechend bewegen können. Sie besteht aus einem Vibrator und einer Vorrichtung für den Eintrag der Schwingungen in die Flüssigkeit. Eine schwingfähige Membran trennt den außen liegenden Vibrator vom Innenraum und verhindert so das Austreten der zu behandelnden Flüssigkeit. Die Schwingung wird vorteilhaft so ausgerichtet, daß die bevorzugte Schwingungsrichtung die Vertikale ist.

Zur Erzeugung vertikal gerichteter Schwingungen können Vibratoren mit einer gerichteten oder einer ungerichteten Schwingung eingesetzt werden. Beim Einsatz von Vibratoren mit ungerichteter Schwingung sind entsprechende Stabilisatoren als Lenker angeordnet, mit denen der Eintrag der Schwingungen in vertikaler Richtung erfolgt, wobei die Stabilisatoren an der einen Seite die Vibrationseinrichtung führen und auf der Drehpunktseite mit dem Gehäuse des Preßschneckenseparators verbunden sind.

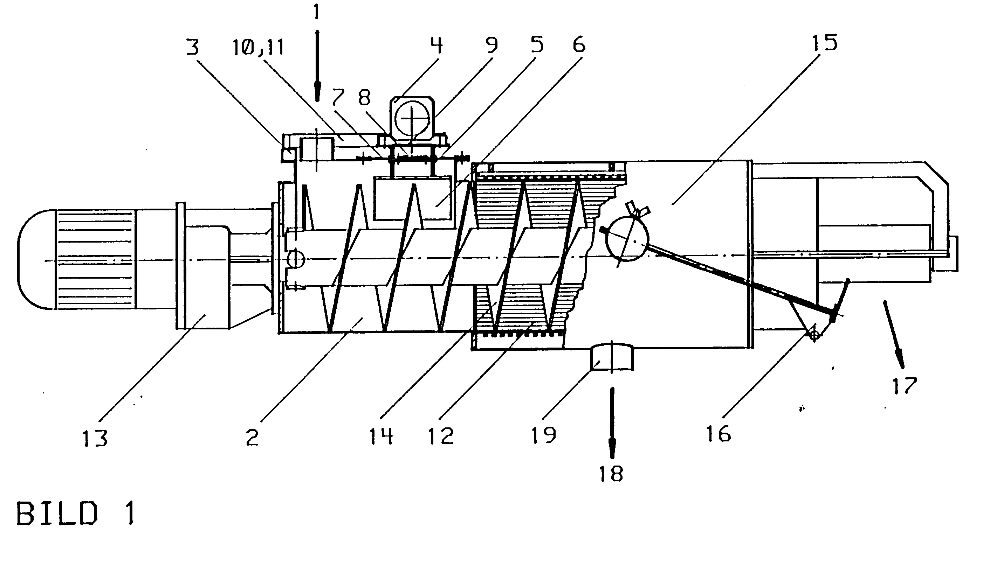

Das Wesen der Erfindung wird an Hand des in der Figur 1 dargestellten Ausführungsbeipiels näher erläutert; dabei zeigt die
- Fig. 1:: Eine Schema-Ansicht eines Preßschneckenseparators mit Vibrationseinrichtung;
- Fig. 2:: Einzelheit der Vibrationseinrichtung.

Von der Stallanlage wird mit einer Pumpe die schleimige Gülle 1 in den Befüllraum 2 eines Preßschneckenseparators gepumpt. Auf dessen Deckel 3 ist ein Vibrator 4 angeordnet, der über die Stützrippen 5 die Vibration an den Schwinger 6 übertragen kann. Die Membran 7 ist zwischen den Verbindungsplatten 8 verklemmt und schließt so den Separator-Innenraum zu dem außenliegenden Vibrator hin ab und ermöglicht die freie Bewegung desselben. Zum Einsatz gelangen vorteilhaft einfache kräftige Vibratoren, die ungerichtete Schwingungen abgeben. Für die Einleitung vertikaler Schwingungen in die schleimige Flüssigkeit sind an der Befestigungsplatte 9 des Vibrators 4 Stabilisatoren 10 angeordnet, die als Lenker ausgebildet sind. Diese führen an der einen Seite die Vibrationseinrichtung und sind auf der Drehpunktseite mit dem Gehäuse des Separators verbunden. Alle schwingenden Elemente werden von federnden Elementen wie Gummipuffern oder Federn 11 getragen.

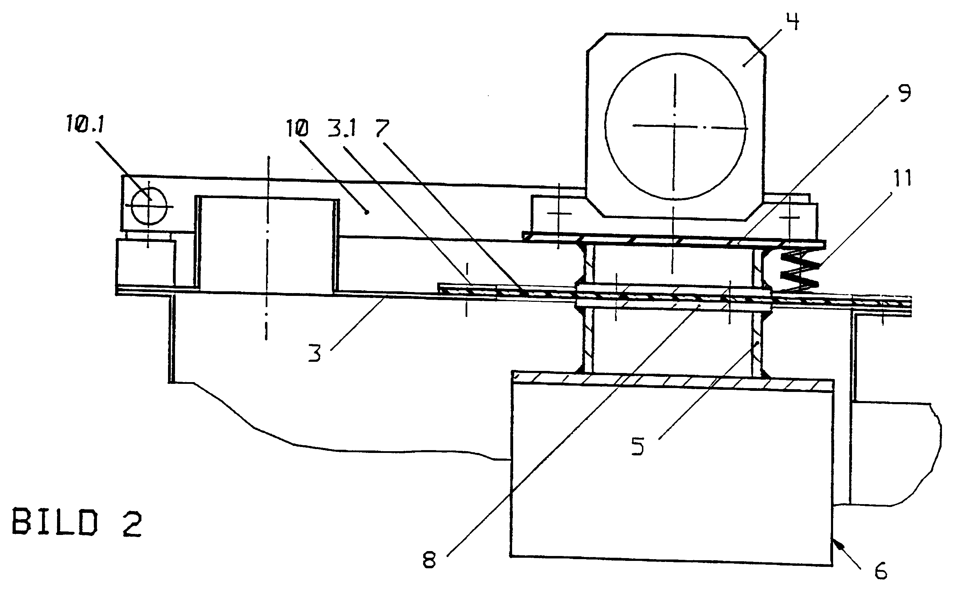

In der Figur 2 ist die Vibrationseinrichtung vergrößert dargestellt. Der Vibrator 4 sitzt auf einer Befestigungsplatte 9, die ihrerseits mit den Stabilisatoren 10 verbunden ist. Die Stabilisatoren 10 sind mittels einer Verbindung 10.1, hier als Anlenkung dargestellt, an dem Gehäuse des Separators abgestützt, das im Bereich des Einlaufs für die Gülle 1 mit einem Deckel 3 abgedeckt ist. Dieser Deckel 3 besitzt eine Öffnung, die mit einer Membran 7 verschlossen ist, die ihrerseits mit einem umlaufenden Rahmen 3.1 versehen ist, zum Einklemmen dieser Membran 7. Die Vibrationseinrichtung 4 wirkt über eine Klemmbefestigung 5 an der Membran auf den Schwinger 6, dessen dem Radius der Schnecke entsprechend angepasste Halbschale die Schwingungen auf die Gülle im Einlaufraum des Separators überträgt. Der Stabilisator 10 ist mit federnden Elementen -hier als Federn 11 dargestellt- gegen das Separatorgehäuse abgestützt. Es versteht sich von selbst, daß der Stabilisator mit seiner elastischen Abstützung auch symmetrisch ausgebildet sein kann; in diesem Fall sind diese beidseits des Vibrators 4 vorgesehen.

Die eingeleitete Schwingung verbessert das Fließverhalten der schleimigen Flüssigkeit, so daß diese durch die vorteilhaft spaltförmig ausgebildeten Öffnungen des Siebkorbes 12 abfließen kann. Durch die damit zusammenhängende Aufkonzentration erfasst die vom Getriebemotor 13 angetriebene Schnecke 14 die Feststoffe und drückt diese zur weiteren Entwässerung in den Preßbereich 15 des Separators.

Der Ausstoßregler 16 beeinflusst die erforderliche Festigkeit des Feststoffpfropfens. Während der abgetrennte Feststoff 17 nun als krümliges Produkt herausfällt, fließt die gesiebte Flüssigkeit 18 über den Stutzen 19 aus der Maschine ab.

## Patentansprüche

1. Verfahren zur Abtrennung von Feststoffen aus schleimigen Flüssigkeiten mit Separatoren, bei denen der Preßdruck mit Hilfe einer Schnecke (14) aufgebaut wird, **dadurch gekennzeichnet,** daß in den Befüllraum (2) des Separators Schwingungen eingetragen werden, deren Wirkung sich bis in den Eingangsbereich des Siebkorbes (12) fortsetzt, damit die Verringerung der Viskosität der schleimigen Flüssigkeit bewirkt und so die für die Abtrennung der Feststoffe erforderliche Schwerkraftentwässerung ermöglicht.

2. Vorrichtung zur Durchführung des Verfahrens nach Anspruch 1, mit Separatoren, bei denen der Preßdruck mit Hilfe einer Schnecke (14) aufgebaut wird, mit einem Gehäuse, in dem zumindest ein Siebkorb (12) und eine Schnecke (14) angeordnet sind und das mindestens aufweist einen Befüllraum (2) sowie einen Feststoff- und einen Flüssigkeitsaustrag, (17, 18), **dadurch gekennzeichnet,** daß ein Vibrator (4) außerhalb des Befüllraumes (2) vorgesehen ist, dessen Schwingungen über Stützrippen (5) auf einen in der Flüssigkeit angeordneten Schwinger (6) übertragbar sind, wobei eine Membran (7) den Abschluß des Innenraumes des Separators gewährleistet und alle schwingenden Elemente von Federn oder Gummipuffern (11) getragen werden und in vertikaler Richtung entsprechend bewegbar sind.

3. Vorrichtung nach Anspruch 2, **dadurch gekennzeichnet,** daß für den Eintrag ungerichteter Schwingungen des Vibrators (4) in vertikaler Richtung als Lenker ausgebildete Stabilisatoren (10) vorgesehen sind, die an der einen Seite die Vibrationseinrichtung mit dem Vibrator (4) führen und auf der Drehpunktseite mit dem Gehäuse des Separators durch eine Anlenkung (10.1) verbunden sind.

## Claims

1. Process for separating solid matter from slimy liquids with separators, in which separators the pressing effect is built up with the aid of a screw (14), **characterised in that** oscillations are carried into the filling chamber (2) of the separator, the effect of which oscillations continues as far as into the inlet region of the strainer basket (12) so that the reduction of the viscosity of the slimy liquid is brought about and so the draining by gravity necessary for the separation of the solid matter is rendered possible.

2. Device for carrying out the process according to claim 1, with separators, in which separators the pressing effect is built up with the aid of a screw (14), having a housing, in which housing at least one strainer basket (12) and one screw (14) are disposed and which housing at least comprises a filling chamber (2) as well as a solid material discharge point (17) and liquid discharge point (18), **characterised in** **that** a vibrator (4) is provided outside the filling chamber (2), the oscillations of which can be transferred by way of stiffening ribs (5) to an oscillator (6) disposed in the liquid, wherein a membrane (7) assures the closing of the inner chamber of the separator and all oscillating elements of springs or rubber buffers (11) are carried and can be correspondingly moved in a vertical direction.

3. Device according to claim 2, **characterised in that** for the introduction of undirected oscillations of the vibrator (4) stabilisers (10), formed as guide rods, are provided in a vertical direction, which stabilisers at the one end guide the vibration device having the vibrator (4), and at the pivot end are connected to the housing of the separator by means of a joint (10.1).

## Revendications

1. Procédé de séparation de matières solides de liquides mucilagineux, avec des séparateurs où la force de compression est créée à l'aide d'une vis (14), caractérisé en ce que des vibrations sont provoquées dans l'espace d'alimentation (2) du séparateur et dont l'effet se continue jusqu'à la zone d'entrée du panier à tamis (12) afin que la diminution de la viscosité du liquide mucilagineux en résulte et que la déshydratation par gravité requise pour la séparation des matières solides, soit rendue possible.

2. Dispositif pour mettre en oeuvre le procédé selon la revendication 1, avec des séparateurs dans lesquels la force de compression est créée à l'aide d'une vis (14) avec un corps dans lequel sont disposés au moins un panier à tamis (12) et une vis (14) et qui comprend au moins un espace d'alimentation (2) ainsi qu'une sortie des matières solides et de liquides (17, 18), caractérisé en ce qu'il est prévu un vibreur (4) en dehors de l'espace d'alimentation (2), dont les vibrations peuvent être transmises par l'intermédiaire de nervures de support (5) à un élément vibrant (6) disposé dans le liquide, tandis qu'une membrane (7) assure la fermeture de l'espace intérieur du séparateur et que tous les éléments vibrants sont supportés par des ressorts ou des tampons en caoutchouc (11) et peuvent se déplacer en direction verticale.

3. Dispositif selon la revendication 2, caractérisé en ce que des stabilisateurs (10) sont prévus pour jouer le rôle de guide et envoyer des vibrations non orientées du vibrateur (4) en direction verticale, ces stabilisateurs guidant d'un côté le dispositif vibrant avec le vibreur (4) et étant assemblés sur le côté du point de rotation au corps du séparateur, par l'intermédiaire d'une articulation (10.1).
